# EUROPEAN PATENT SPECIFICATION

(11) **EP 2 570 338 B1**
(45) Date of publication and mention of the grant of the patent: **22.07.2015**
(21) Application number: 12183282.8
(22) Date of filing: 06.09.2012
(51) Int. Cl.: B62K 21/04, B62K 21/18, B62K 21/22

(54) **Motorbike**
Motorrad
Motocyclette

(30) Priority: 16.09.2011 IT PR20110078
(43) Date of publication of application: 20.03.2013
(73) Proprietor: Diapason Racing S.R.L., 43121 Parma (IT)
(72) Inventor: Buratti, Giovanni, 43121 Parma (IT)
(74) Representative: Benelli, Cristian

(56) References cited:
- DE-U1- 29 916 963
- JP-A- 59 137 270
- US-A1- 2010 096 828

## Description

### FIELD OF APPLICATION OF THE INVENTION

The present invention finds application in the field of motorcycles, and, more specifically, it relates to a mechanical system for changing the position of half-handles of a motorbike.

The term "motorbike" refers to class motorcycles such as: supersport, sport touring, touring, endurance, custom, motocross, trial, dirt track.

The system allows positioning on at least two different vertical positions, so as to provide the possibility to choose between a deployed position, with a lowered handle, or more upright, that is, with a lifted handle.

An example of prior art is described in the following patents: JPS59137270 on which the preamble of claim 1 is based, US2010/096828, DE29916963. None of them reveals a mechanical system for changing the position of half-handles of a motorbike according the claimed invention.

### DISCLOSURE AND ADVANTAGES OF THE INVENTION

The object of the present invention is to provide a motorbike with a mechanical system for rapidly changing the position of half-handles.

ADVANTAGES: both positions can be swapped with no particular provision on the interconnection element of the fork prongs; the only operation that will be needed is disassembling the half-handles and repositioning thereof on corresponding seats or heads formed on the interconnection element.

Said objects and advantages are all achieved by the motorbike according to the present invention described herein, which is characterized by provisions made in the appended claims below.

### BRIEF DESCRIPTION OF THE DRAWINGS

This and other features will be more apparent from the following description of a number of embodiments illustrated, only in a simplified and non-limiting way, in the drawings of the attached figures.
Figure 1: shows an exemplary motorbike
Figure 2: shows another exemplary motorbike

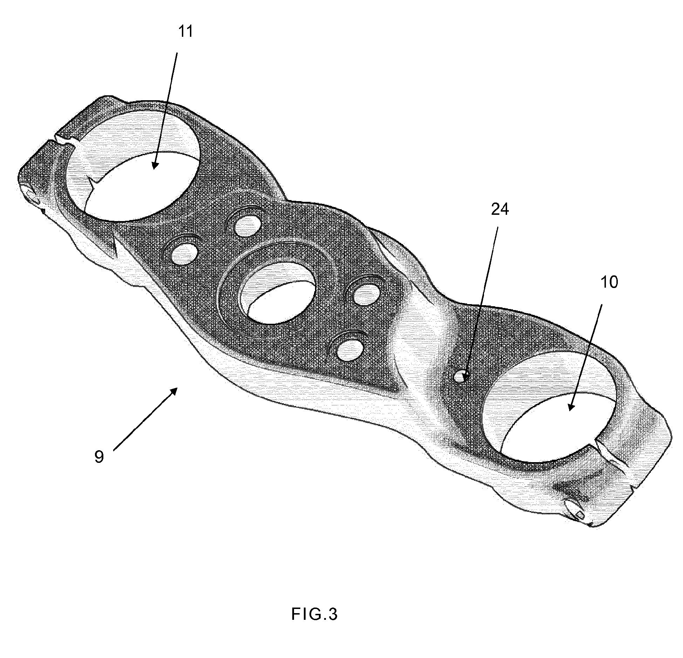

Figure 3: shows the interconnection element of the prongs,

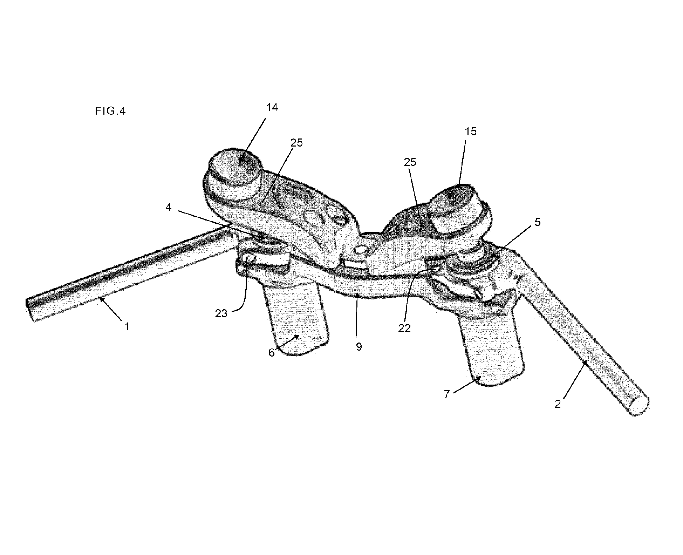

Figure 4: shows the system for changing the height of half-handles, with a prongs interconnection element and support wings for the second heads, in a low configuration,

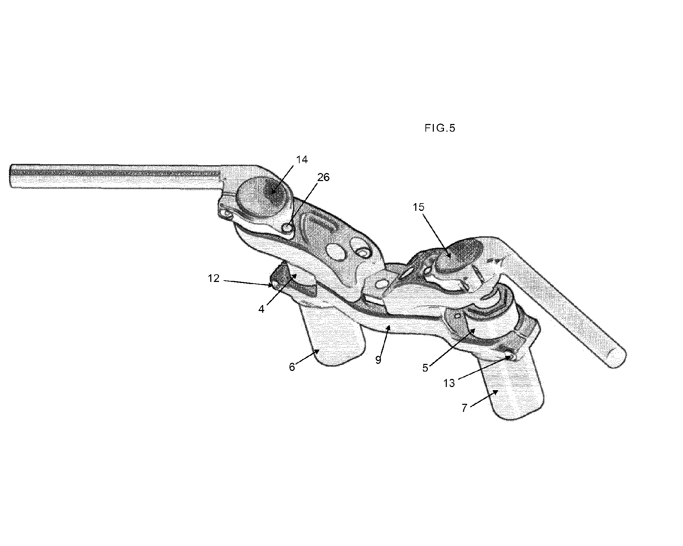

Figure 5: shows the system for changing the height of half-handles, in an upraised configuration,

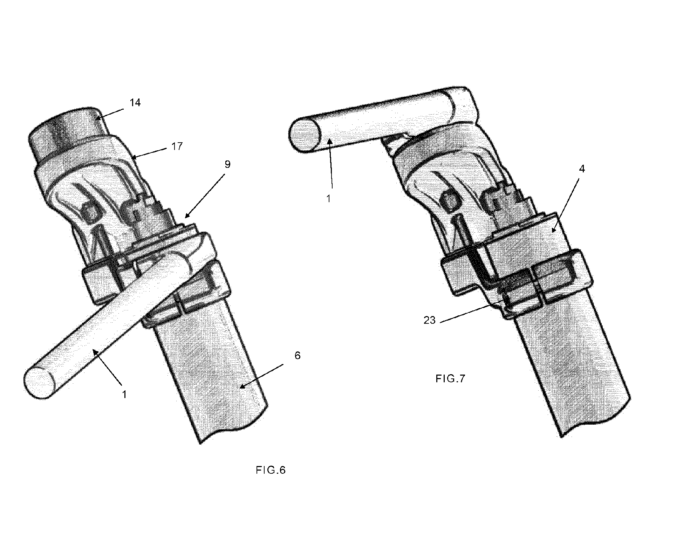

Figure 7: shows the system for changing the height of right-side half-handles, in a high configuration,

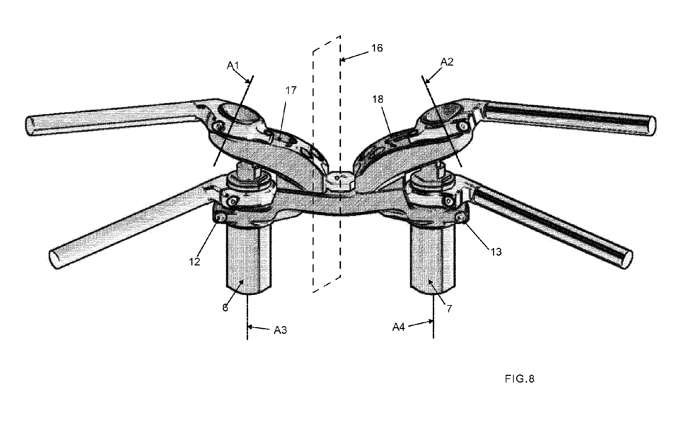

Figure 8: shows the system for changing the height of half-handles, in a front view, with indication of all possible positions of half-handles.

The motorbike components can be classified in different categories: bike components and propulsive apparatus.

Bike components comprise:
A frame and sub-frame (also called underframe or ancillary frame), stationary members suitable for connection of bicycle, motor and mechanical parts;
A saddle, required to seat on the bike, which can be found practically on all motorcycles, except for modern trial bikes;
Foot rest elements, secured to the frame, which allow proper positioning of feet/legs;
A side stand/support, elements allowing to park the motorbike, individually or in a pair;
Shock-absorber/suspension systems, dynamic elements suitable for absorbing bumps in the ground and ensure appropriate contact with the soil;
Front fork element, conventionally also connected to the handle; this latter being necessary for steering of the means of transportation;
Back fork element, which only in the rarest cases is a rigid element, as is the case for a bicycle;
Wheels, rotating parts of bike components;
Wheel rim, supports the tire and the rotating part of the braking system and/or transmission system;
Tire, basic element to ensure road-holding of the vehicle;
Braking system, exhibiting a stationary part and a movable part; both parts allowing slowing down or stopping the vehicle, this system is generally present both at the front and at the back, but in few sporadic cases such certain custom models the front element is missing.

Basic elements for propelling the vehicle are:
Engine block, mechanical parts for the propeller power transmission/conversion;
Thermal assembly, portion that deals with converting energy from chemical to mechanical end that requires a specific cooling system;
Crankcase, element enclosing and supporting the main parts of engine block;
Gearbox, useful to provide variation of reduction rate between engine and driving wheel;
Clutch, functioning to connect or disconnect the engine from gearbox or from final transmission;
Ignition system, required for thermochemical conversion of fuel;
A fuel supply system allows to correctly supply the engine;
Exhaust system, allowing appropriate handling of exhaust gases;
Starting system, providing for ready start of the propeller;
Transmission, all members connecting the thermal assembly to the wheel, it is divided in primary (from engine to gearbox) and secondary (from gearbox to wheel), which can be the Cardan joint, the chain or gearwheel sprocket/crown system with cogged belt.

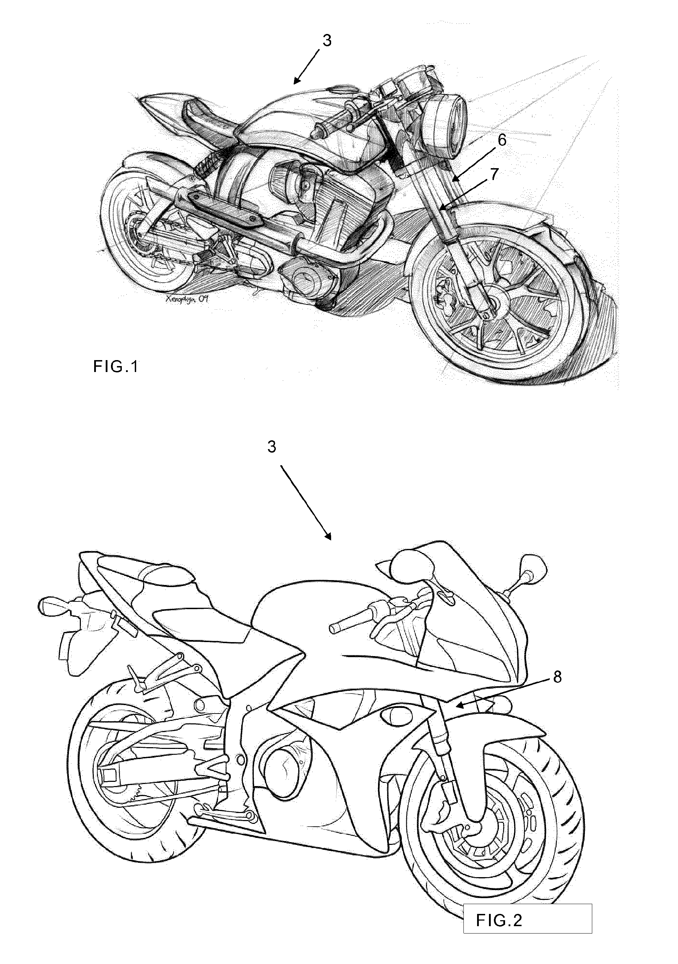

In figures 1 and 2 two types of motorcycles, indicate by reference number 3, are shown.

Particularly referring to the front region of motorbike 3, the presence of a fork 8, component connecting the front wheel to the frame and allowing to steer, in addition to function as a suspension (controlling movement of the frame with respect to the tire) and as a shock absorber (damping and slowing oscillation), is observed.

Fork 8 is generally consists of two pairs of coaxial tubes, one of them sliding within the other, wherein the smaller diameter tube is called stem, whereas the larger diameter one is called sheath. Each pair is called "prong".

In the example, the prongs are denoted by reference 6 and 7, and they are parallel, as indicated by axes A3, A4; to cause the prongs to remain parallel, the ends thereof are connected to the front wheel pivot and connected to the steering tube through an interconnection element denoted by reference 9.

The invention indeed refers to a motorbike comprising a mechanical system suitable for varying the position of half-handles 1, 2, carried out on one of the above mentioned interconnection elements 9, that is, the upper one.

It has to be noticed that half-handles 1, 2 include a hollow seat having a cross-section corresponding to that of matching parallel heads 4, 5 of fork 8, and defined by the outmost portion of prongs 6, 7 which exit from the side opposite to element 9 insertion side. Significantly each head 4, 5 is nothing but the terminal portion, that is the end, of said prongs 6, 7 which extend, on the opposite side, after they have been inserted into the pair of holes (or eyelets) 10 and 11, formed in the element itself; said holes being symmetrically disposed with respect to the median plane 16, as indicated in the figures.

In addition, said pair of holes 10, 11 are closable against prong portions 6, 7 inserted therein; this is accomplished through closing means 12, 13, such as fastening screws.

Typically, half-handles 1 and 2 are made integral with said portion 4 and 5; more specifically, the abovementioned is carried out by employing fastening and angular position centring means 22, 23, 24.

The invention is realized in the fork upper portion, indicated here by interconnection element 9; substantially, in addition to the foregoing, the element comprises at last a second pair of heads 14, 15, symmetrically arranged with respect to median plane 16 parallel to the direction of prongs 6, 7.

The above-mentioned heads 14, 15 have the same section, that is dimension, of that of prong heads 4, 5, so that one can choose on which heads half-handles 1 and 2 can be secured.

These two second heads 14, 15 are attached to interconnection element through two wings, or appendages, 17 e 18, arranged in a "V" shape, which extend upwards with respect to the interconnection element, that is to say, thereby positioning the second heads at a higher vertical height than the first prong heads. In other words, if the fork extends from below, defined as the wheel centre, from above, defined as element 9, wings 17, 18 further heighten upwards to a higher height than that of said element 9.

Preferably, second heads 14, 15 are screwable into corresponding threaded cavities of the V-shape appendages, nevertheless, this is non-limiting for the required protection. Once screwed, heads 14, 15 extend further above wings 17, 18, that is to say, in the same direction as heads 4 and 5 extend from element 9. An alternative embodiment provides heads which extend downwards with respect to said wings, so as to face, once secured on the wings, towards first heads 4 e 5.

Further, adjacent to heads 14 and 15, two holes 25 are formed, in which corresponding angular position centring dowels 26 of the half-handles will be inserted, in the same manner as described above regarding centring on heads 4 and 5.

Appendages 17 and 18 are, in the example, attachable to element 9 by means such as fastening screws; alternatively, they can be formed by casting said element 9 or from solid.

Lastly, It is observed that axes A1, A2 of second heads 14, 15 are convergent, whereas the prong axes A3, A4 are parallel to each other. Such a configuration allows to further heighten the handle.

Alternatively, axes (A1, A2) of the second heads and axes (A3, A4) of the prongs can be all parallel.

## Claims

1. A motorbike (3) comprising a front wheel fork (8) having prongs (6, 7) with parallel axes (A3, A4) wherein the ends of the prongs (6, 7) are connected to a front wheel pivot and a steering tube through an interconnection element (9), and a mechanical system for changing the position of half-handles (1, 2) of the motorbike (3), said half-handles (1, 2) comprising hollow seats having cross-sections corresponding to that of a matching first pair of heads (4, 5) projecting parallel to each other from the interconnection element (9), the first pair of heads (4, 5) being the terminal portions of the prongs (6, 7) insertable in a corresponding pair of holes or eyelets (10, 11) defined in the interconnection element (9), the pair of holes or eyelets (10, 11) being closable against said portions of the prongs (6, 7) by closing means (12, 13), **characterised by** the fact that a second pair of heads (14, 15) is joined to the interconnection element (9) through two wings or appendages (17, 18) arranged as a "V" so that they extend above the interconnection element (9) and the second pair of heads (14, 15) are positioned at a height greater than that of the first pair of heads (4, 5) wherein the second pair of heads (14, 15) are symmetrically arranged with respect to a median plane (16) and parallel to the direction of the prongs (6, 7) and the second pair of heads (14, 15) have the same size as the first pair of heads (4, 5) on which the half-handles (1, 2) are fixed.

2. A motorbike (3) according to claim 1, **characterized by** the fact that said second pair of heads (14, 15) are screwable inside corresponding threaded cavities of the wings (17, 18).

3. A motorbike (3) according to claim 1, **characterized by** the fact that the second pair of heads (14, 15) extend above the wings (17, 18) substantially in the same direction of the first pair of heads (4, 5).

4. A motorbike (3) according to claim 1, **characterized by** the fact that the second pair of heads (14, 15) extend under the wings (17, 18) so that they face, once fixed to the wings, towards the first pair of heads (4, 5).

## Patentansprüche

1. Motorrad (3), umfassend eine Gabel (8) des Vorderrades mit Zähnen (6, 7) mit parallelen Achsen (A3, A4), bei dem die Enden der Zähne (6, 7) an einem Zapfen des Vorderrades und an einem Steuerrohr mittels eines Verbindungselements (9) verbunden sind, und mit einem mechanischen System, um die Position von Halblenkern (1, 2) des Motorrades (3) zu verändern, wobei die besagten Halblenker (1, 2) hohle Aufnahmen aufweisen, deren Querschnitte denen eines ersten Paares von Kupplungsköpfen (4, 5) entsprechen, die parallel zueinander aus dem Verbindungselement (9) kragen, wobei das erste Paar von Köpfen (4, 5) Endabschnitte der Zähne (6, 7) sind, die in ein entsprechendes Paar von Löchern oder Ösen (10, 11) im Verbindungselement (9) eingesetzt werden können, wobei das Paar von Löchern oder Ösen (10, 11) gegen die besagten Abschnitte der Zähne (6, 7) durch Schließmittel (12, 13) verschließbar sind, **dadurch gekennzeichnet, dass** ein zweites Paar von Köpfen (14, 15) mit dem Verbindungselement (9) durch zwei Zungen oder Anhänge (17, 18) verbunden sind, die in der Form eines "V" derart angeordnet sind, dass sie sich über dem Verbindungselement (9) und dem zweiten Paar von Köpfen (14, 15) in einer Höhe höher als die des ersten Paares von Köpfen (4, 5) erstrecken, wobei das zweite Paar von Köpfen (14, 15) symmetrisch bezüglich einer mittleren Ebene (16) und parallel zu der Richtung der Zähne (6, 7) angeordnet sind, und das zweite Paar von Köpfen (14, 15) die gleichen Abmessungen des ersten Paares von Köpfen (4, 5) aufweisen, auf den die Halblenker (1, 2) festgelegt sind.

2. Motorrad (3) nach Anspruch 1, **dadurch gekennzeichnet, dass** das zweite Paar von Köpfen (14, 15) in entsprechenden Gewindehohlräumen der Zungen (17, 18) eingeschraubt werden.

3. Motorrad (3) nach Anspruch 1, **dadurch gekennzeichnet, dass** das zweite Paar von Köpfen (14, 15) sich oberhalb der Zungen (17, 18), im wesentlichen in der gleichen Richtung wie das erste Paar von Köpfen (4, 5), erstrecken.

4. Motorrad (3) nach Anspruch 1, **dadurch gekennzeichnet, dass** das zweite Paar von Köpfen (14, 15) sich unterhalb der Zungen (17, 18), für die sie bestimmt sind, derart erstrecken, dass sie, einmal mit den Zungen befestigt, in Richtung des ersten Paares von Köpfen (4, 5) erstrecken.

## Revendications

1. Moto (3) comportant une fourche (8) de la roue avant pourvue de dents (6, 7) avec des axes parallèles (A3, A4), dans laquelle les extrémités des dents (6, 7) sont connectées à une broche de la roue avant et à un tube de direction au moyen d'un élément d'interconnexion (9), et un système mécanique pour modifier la position des demi-guidons (1, 2) de la moto (3), lesdits demi-guidons (1, 2) comprenant des sièges creux avec des sections normales correspondant à celles d'une première paire de têtes d'accouplement (4, 5) faisant saillie parallèlement l'une à l'autre par l'élément d'interconnexion (9), la première paire de têtes (4, 5) étant les parties d'extrémité des dents (6, 7) pouvant être insérées dans une paire correspondante de trous ou oeillets (10, 11) formés dans l'élément d'interconnexion (9), la paire de trous ou oeillets (10, 11) pouvant être fermée contre lesdites parties des dents (6, 7) par des moyens de fermeture (12, 13), **caractérisée en ce qu'**une deuxième paire de têtes (14, 15) sont reliées à l'élément d'interconnexion (9) par deux languettes ou ailettes (17, 18) disposées en forme de "V", pour lesquelles ceux-ci se développent au dessus de l'élément d'interconnexion (9) et la deuxième paire de têtes (14, 15) sont positionnés à une hauteur supérieure à celle de la première paire de têtes (4, 5), dans laquelle la deuxième paire de têtes (14, 15) sont disposées symétriquement par rapport à un plan médian (16) et sont parallèles à la direction des dents (6, 7), et la deuxième paire de têtes (14, 15) ont les mêmes dimensions de la première paire de têtes (4, 5), sur laquelle sont fixés les demi-guidons (1, 2).

2. Moto (3) selon la revendication 1, **caractérisée en ce que** ladite deuxième paire de têtes (14, 15) peuvent être vissées dans des cavités filetées correspondantes des ailettes (17, 18).

3. Moto (3) selon la revendication 1, **caractérisée en ce que** la deuxième paire de têtes (14, 15) s'étendent au-dessus des ailettes (17, 18) sensiblement dans la même direction de la première paire de têtes (4, 5).

4. Moto (3) selon la revendication 1, **caractérisée en ce que** la deuxième paire de têtes (14, 15) s'étendent au-dessous des ailettes (17, 18), pour laquelle elles sont adressées, une fois fixées aux ailettes, vers la première paire de têtes (4, 5).
